# EUROPEAN PATENT SPECIFICATION

(11) **EP 3 281 128 B1**
(45) Date of publication and mention of the grant of the patent: **15.09.2021**
(21) Application number: 16833285.6
(22) Date of filing: 29.07.2016
(51) Int. Cl.: G06F 16/957, H04L 29/08, G09G 5/36, G06F 40/14, G06F 3/14

(54) **ELECTRONIC DEVICE AND SERVER RELATED TO RENDERING OF WEB CONTENT AND CONTROLLING METHOD THEREOF**
ELEKTRONISCHE VORRICHTUNG UND SERVER IM ZUSAMMENHANG MIT DEM RENDERING EINES WEBINHALTS UND STEUERUNGSVERFAHREN DAFÜR
DISPOSITIF ÉLECTRONIQUE ET SERVEUR ASSOCIÉS AU RENDU DE CONTENU WEB, ET LEUR PROCÉDÉ DE COMMANDE

(30) Priority: 31.07.2015 IN 3977CH2015; 29.02.2016 IN 3977CH2015; 18.07.2016 KR 20160090838
(43) Date of publication of application: 14.02.2018
(73) Proprietor: Samsung Electronics Co., Ltd., Suwon-si, Gyeonggi-do 16677 (KR)
(72) Inventor: SG, Naveen Kumar, Bangalore 560093 (IN); MADUGUNDU, Pruthvi Kumar, Bangalore 560068 (IN); MOGALI, Srirama Chandra Sekhar, Kakinada Andhra Pradesh 533005 (IN); BOSE, Joy, New Delhi 110019 (IN)
(74) Representative: Appleyard Lees IP LLP
(86) International application number: PCT/KR2016/008404
(87) International publication number: WO 2017/023049

(56) References cited:
- WO-A1-2015/090064
- US-A1- 2003 014 478
- US-A1- 2007 079 244
- US-A1- 2012 260 157
- US-A1- 2013 268 843
- US-A1- 2015 120 823
- US-B1- 8 913 067
- US-B2- 8 510 371

## Description

### Technical Field

The present disclosure relates to an electronic device associated with rendering of web content, a server, and a controlling method thereof. More particularly, the present disclosure relates to an electronic device which renders web content, a server supporting rendering of web content, and a controlling method thereof.

### Background Art

Generally, user accesses web content on the internet by: (1) executing a "web browser" locally on data processing device(s) (e.g., an electronic device(s), internet of things (IoT) devices, and a mobile device such as a smart phone, personal digital assistant (PDA), or the like) and, (2) interconnecting to a server coupled to a network associated with the data processing device. The web browser receives the web content in a format comprehensible by the web browser. The format such as for e.g., hypertext mark-up language (HTML) or parser. The web browser then interprets and generates corresponding display in accordance with the received input format, the HTML or the parser, through a rendering engine.

The display quality of the web content rendered through the rendering engine, associated with sever based web browsers, is not accurate as the rendering process is executed on the server itself, which causes the rendering issues. The display of the web content rendered through the rendering engine, associated with the client based browsers (data processing device locally) affects the performance of the data processing device, as the rendering process consumes more power (random access memory (RAM) usage, processing time, battery or the like). Thus, it's a cumbersome rendering process, which therefore causes the rendering issues.

Albeit, the method: web browser mini rendering system where the HTML files to be rendered is converted to an intermediate light weight format. The converted rendered file loses some rendering quality. The rendering of the content, from the rendering engine associated with the server based browsers, like text, shapes, spacing between elements is not exactly same as client based browsers and also the pixel by pixel comparison is not exactly identical in the aforementioned method.

Thus, there is a need of a simple and robust mechanism to improve the quality of the web content, associated with the web browser, rendered through both the server based and the client based rendering systems.

US 2012/260157 A1 discloses a system for implementing a cooperative rendering cache (CRC)-browser for a mobile device e.g. mobile phone, which has a client synchronization module which is synchronized with a client device.

US 2003/014478 A1 discloses a browser server that performs parsing, layout and rendering processes on the information requested by a browser client.

US 2013/268843 A1 discloses a method, apparatus and system for rendering a web page, wherein a webcore is included at a server side and a 'RenderServer' is configured at the server side in advance.

The above information is presented as background information only to assist with an understanding of the present disclosure. No determination has been made, and no assertion is made, as to whether any of the above might be applicable as prior art with regard to the present disclosure.

### Disclosure of Invention

### Technical Problem

Aspects of the present disclosure are to address at least the above-mentioned problems and/or disadvantages and to provide at least the advantages described below.

### Solution to Problem

The invention is defined by the independent claims.

Preferred embodiments are defined in the dependent claims.

### Brief Description of Drawings

The above and other aspects, features, and advantages of certain embodiments of the present disclosure will be more apparent from the following description taken in conjunction with the accompanying drawings, in which:
FIG. 1 illustrates a block diagram of a system to cause rendering of web content according to an embodiment of the present disclosure;
FIG. 2 illustrates a block diagram of a system to cause rendering of web content according to an embodiment of the present disclosure;
FIG. 3 illustrates another block diagram of a system to cause rendering of web content according to an embodiment of the present disclosure;
FIG. 4 illustrates another block diagram of a system to cause rendering of web content according to an embodiment of the present disclosure;
FIG. 5 is a flow diagram that illustrates a method to cause rendering of web content through a server according to an embodiment of the present disclosure;
FIGS. 6A to 6C are flow diagrams illustrating a method for generating a render structure including draw commands according to various embodiments of the present disclosure;
FIG. 7 is a flow diagram illustrating a method to cause rendering of web content through a server according to an embodiment of the present disclosure;
FIGS. 8A to 8C are flow diagrams illustrating a method to cause rendering of web content through an electronic device according to various embodiments of the present disclosure;
FIGS. 9A to 9D illustrate embodiments for a method to cause rendering of web content according to various embodiments of the present disclosure; and
FIG. 10 illustrates a computing environment implementing a method to cause rendering of web content according to an embodiment of the present disclosure.
Throughout the drawings, like reference numerals will be understood to refer to like parts, components, and structures.

### Best Mode for Carrying out the Invention

Descriptions of well-known functions and constructions may be omitted for clarity and conciseness.

The terms and words used in the following description and claims are not limited to the bibliographical meanings, but, are merely used by the inventor to enable a clear and consistent understanding of the present disclosure. Accordingly, it should be apparent to those skilled in the art that the following description of various embodiments of the present disclosure is provided for illustration purpose only and not for the purpose of limiting the present disclosure as defined by the appended claims.

It is to be understood that the singular forms "a," "an," and "the" include plural referents unless the context clearly dictates otherwise. Thus, for example, reference to "a component surface" includes reference to one or more of such surfaces.

In an embodiment, web content rendering is a process of rendering web pages, web images, or the like accessed by an electronic device through a web browser application. The web content rendering includes a rendering framework (e.g., a rendering engine), residing in the electronic device and a rendering framework (e.g., a rendering engine), residing in the server interconnected to the electronic device. The rendering framework residing in the electronic device can include a plurality of components (e.g., image decoders, a font engine, 2-dimensional (2D) graphics renderer, a device screen, or the like). The rendering framework residing in the server can include a plurality of components (e.g., hypertext mark-up language (HTML) view, a 2D graphics renderer, an HTML engine, a JavaScript (JS) engine, a cloud infra, or the like).

For example, consider the electronic device accesses web content on the internet (e.g., network) by executing a web browser application associated with the electronic device. At first, the rendering engine associated with the electronic device receives the web content (e.g., HTML, cascading style sheets (CSS), JS, or the like) thereon, the rendering engine, parses the received web content from the internet. Further, the rendering engine creates various trees (e.g., a document object model (DOM) tree, a render tree, or the like) based on the web content parsed.

Furthermore, based on the web content the rendering engine creates one or more layers i.e. render layers. The render layers include one or more action(s) to be performed on the web content displayed on to the electronic device. The one or more action includes for e.g., enabling flick tab, increasing zooming performance, scrolling, or the like. Based on the web content the one or more layers can be varied (increased or decreased). Each render layer can have its own rendering surface where the content is painted by the graphics engine associated with the electronic device. As such when a user of the electronic device flicks the screen, the corresponding render layer is composited onto the screen of the electronic device.

Thus as detailed above the entire rendering mechanism is executed at the electronic device which therefore affects the performance of the electronic device thereof reducing the quality of the web content displayed on the screen, rendered by the rendering engine.

In another example, consider the server interconnected to the electronic device. The server includes the rendering engine to render the web content onto the electronic device. The web content (e.g., the HTML, CSS, the JS or the like) received at the rendering engine is converted to an intermediate light weight format which does not support HTML specification. Further, the rendering engine performs the partial JS execution on the received web content, also the absence of creating render layers and the graphics layers on to the server results in no transformation or animations supported for the displayed web content onto the electronic device.

The embodiments herein disclose a method to cause rendering of the web content. The method includes receiving a request for the web content from the electronic device. Further, the method includes generating a render structure associated with render commands, where the render commands are issued to each layer of a rendering engine to render the web content on the electronic device. Furthermore, the method includes sending the render structure to the electronic device to render the web content.

In an embodiment, generating the render structure associated with the render commands includes cloning, by a render layer pool, a plurality of render layers obtained from the DOM tree. Further, a display layer for one or more render layers cloned by the render layer pool are maintained by a display layer pool. Further, maintaining, by a display render painter, draw commands as the render commands in a data structure, where the draw command is issued to paint each of the display layers to render the web content on the electronic device. Furthermore, writing, by the display render painter, the data structure to the render structure.

In an embodiment, generating the render structure, by the content renderer, associated with the render commands includes merging, by a display renderer, render layers and display layers into a composite layer. Further, the method includes maintaining, by a render structure painter, draw commands as the render commands in a data structure, where the draw commands includes displays instructions to render the web content on the electronic device. Furthermore, the method includes writing, by the render structure painter, the data structure to the render structure.

In an embodiment, generating the render structure associated with the render commands includes merging, by the display renderer, render layers and display layers into the composite layer. Further, maintaining, by a render structure painter (e.g., the display renderer), draw commands as the render commands in the data structure, where the draw commands displays instructions to render the web content on the electronic device. Furthermore, writing, by the display renderer, the data structure to be streamed to the client.

Accordingly, the embodiments herein provide a method to cause rendering of web content. The method includes sending, by the content renderer at the electronic device, a request for the web content to the server. Further, the method includes receiving, by the content renderer, the render structure comprising the render commands from the server, where the render commands are issued to each layer of a rendering engine to render the web content on the electronic device. Furthermore, the method includes causing, by the content renderer, to render the web content on to the screen of the electronic device based on the render structure.

In an embodiment, causing, by the content renderer, to render the web content on to the screen of the electronic device based on the render structure includes decoding, by the display layer interpreter the render structure to extract display layers and the render commands. Further, the method includes converting, by the display layer interpreter, the display layers into individual layers, where each of the layers is maintained in sync with the server. Furthermore, the method includes issuing, by a display command generator, a draw commands as the render commands to paint the layers to render the web content on the electronic device.

In an embodiment, causing, by the content renderer, to render the web content on the screen of the electronic device based on the render structure includes decoding, by a render structure interpreter, the render structure to extract the composite layer and the render commands, where the composite layer comprises display layers and composite layers received from the server. Further, the method includes converting, by the render structure interpreter, the composite layer into individual layers, where each of the layers are maintained in sync with the server. Furthermore, the method includes issuing, by the render structure interpreter, the draw commands as the render commands to paint the layers to render the web content on the electronic device.

In an embodiment, where causing, by the content renderer, to render the web content on the screen of the electronic device based on the render structure includes decoding, by the display command interpreter, the render structure to extract the composite layer and the render commands, where the composite layer comprises display layers and composite layers received from the server. Further, converting, by the display command interpreter, the composite layer into individual layers, where each of the layers is maintained in sync with the server. Further, generating, by the display command interpreter, instructions to render the web content on the electronic device. Furthermore, issuing, by the display command interpreter, the display commands as the render commands to paint the layers to render the web content on the electronic device.

Unlike the systems and methods of the related art, the proposed method provides a mechanism to cause rendering of the web content. The proposed mechanism provides a hybrid mechanism for rendering the web content. Further, the proposed method provides enhanced web browser rendering by distributing the rendering process over the server and the electronic device thereon improving the rendering quality of the web content.

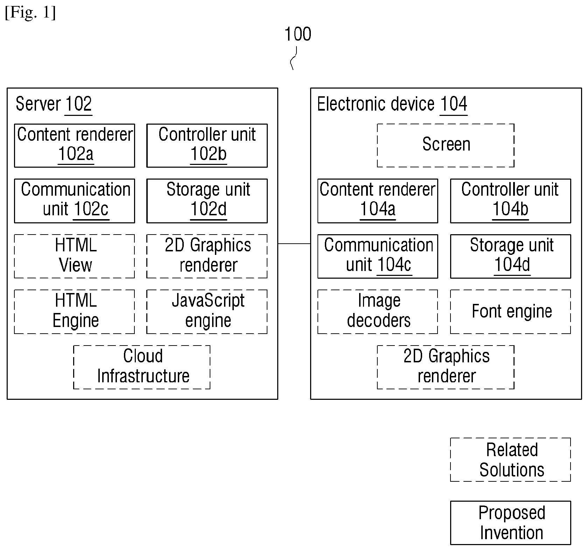

Referring now to the drawings, and more particularly to FIGS. 1 to 5, 6A to 6C, 7, 8A to 8C, 9A to 9D, and 10, where similar reference characters denote corresponding features consistently throughout the figures, there are shown preferred embodiments.

FIG. 1 illustrates a system to cause rendering of web content according to an embodiment of the present disclosure.

Referring to FIG. 1, in an embodiment, a system 100 includes a server 102 and an electronic device 104. The server 102 includes a content renderer 102a and a controller unit 102b communicatively coupled to the content renderer 102a, a communication unit 102c, and a storage unit 102d.

The content renderer 102a receives the web browser details (for ex., uniform resource locator (URL), uniform resource identifier (URI), or the like) associated with the web browser application of the electronic device 104. The content renderer 102a generates a corresponding render structure for the received web details. The content renderer 102a includes draw commands that can be issued to each layer of a rendering engine associated with the server 102 to render the generated render structure on to the electronic device 104.

The electronic device 104 includes a content renderer 104a and a controller unit 104b communicatively coupled to the content renderer 104a, a communication unit 104c and a memory 104d. The electronic device 104 can be for e.g., data processing device, internet of things (IoT) devices, and a mobile device such as a smart phone, personal digital assistant (PDA), or the like.

The content renderer 104a receives the corresponding render structure generated by the server 102. The content renderer 104a includes the render commands that can be issued to each layer of a rendering engine associated with the electronic device 104 to render the received render structure on to the screen of the electronic device 104.

Unlike the mechanism of the related art, the rendering architecture of the server 102 and the rendering architecture of the electronic device 104 includes the content renderer 102a and the content renderer 104a (without disturbing the architecture of the related art) associated therewith as illustrated in FIG. 1. Further, the rendering mechanism can be distributed between the server 102 and the electronic device 104. In an example, initially, part of the rendering mechanism can be performed by the server 102 and then distributed to the electronic device 104 to process the remaining rendering mechanism. As a result of the distributed rendering mechanism between the server 102 and the electronic device 104 the quality of the rendered web content can be significantly improved. Further, the pixel-pixel rendering of the web content is identical though the rendering is executed by the content renderer 102a of the server 102.

Further, the memory 102d may include one or more computer-readable storage media. The memory 102d may include non-volatile storage elements. Examples of such non-volatile storage elements may include magnetic hard discs, optical discs, floppy discs, flash memories, or forms of electrically programmable read only memories (EPROMs) or electrically erasable and programmable ROMs (EEPROMs). In addition, the memory 102d may, in some examples, be considered a non-transitory storage medium. The term "non-transitory" may indicate that the storage medium is not embodied in a carrier wave or a propagated signal. However, the term "non-transitory" should not be interpreted that the memory 102d is non-movable. In some examples, the memory 102d can be configured to store larger amounts of information than the memory. In certain examples, a non-transitory storage medium may store data that can, over time, change (e.g., in random access memory (RAM) or cache). The communication unit 102c can be configured for communicating internally between the units and externally with the networks.

FIG. 1 shows the system 100 but it is to be understood that other embodiments are not limited thereon. In other embodiments, the system 100 may include less or more number of components. Further, the labels or names of the components are used only for illustrative purpose and does not limit the scope of the present disclosure. One or more components can be combined together to perform same or substantially similar function in the system 100.

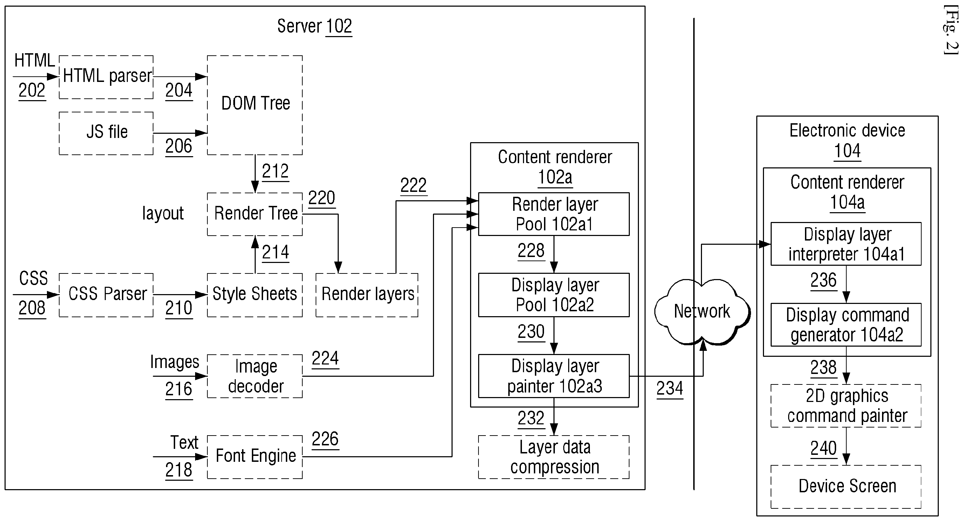

FIG. 2 illustrates a block diagram of a system to cause rendering of web content according to an embodiment as disclosed herein.

Referring to FIG. 2, in an embodiment a content renderer 102a includes a render layer pool 102a1, a display layer pool 102a2, and a display layer painter 102a3. A content renderer 104a includes a display layer interpreter 104a1 and a display command generator 104a2.

In an embodiment, the rendering engine associated with the server 102 receives the web content details associated with the electronic device 104 (i.e. the details associated with the web browser). The web content details can be the HTML file, the CSS file, the images, the text or the like.

At operation 202, the hypertext transfer protocol (HTTP) file associated with the web content is received by the HTML parser. Further, the string of symbols, words, phrases associated with the received HTML file is analyzed through the HTML parser and is tokenized.

At operation 204, the HTML file parsed by the HTML parser is sent to the DOM tree. The DOM tree is created to store node information of the web content corresponding to the received HTML file.

At operation 206, the string of symbols, words, phrases associated with the received the JS file are parsed and compiled (i.e., just-in-time (JIT) compiled) through a JS interpreter. Further the JS file is sent to the DOM tree, where the DOM tree is created to store node information of the web content corresponding to the received JS file.

At operation 208, the string of symbols, words, phrases associated with the received CSS file is analyzed through a CSS parser.

At operation 210, a CSS style sheets are created for the nodes for which the styles are mentioned.

At operation 212 and 214, a render tree is created from the DOM tree and the CSS style sheets for all visible nodes. For each of these nodes, appropriate matching CSS tree rules get multiplied.

At operation 216, the web image resources associated with the web content are sent to an image decoder, where the web image resources are decoded thereof.

At operation 218, the text associated with the web content is sent to a font engine associated with the rendering engine of the server 102. The font engine thus processes the received text.

At operation 220, a render layer is created, the render layer includes one or more layers associated therewith. These render layers can include for e.g., the render tree, the DOM tree, the CSS tree and the decoded image. Further, the render layer associated with the web content is rendered onto the screen of electronic device 104.

At operations 222, 224 and 226, the render layers, the image decoded from the image decoder and the text from the font engine are sent to the render layer pool 102a1. Thus, the render layer pool 102a1 can maintain the render tree structure for each layer created from its corresponding DOM tree. Further, the render layer pool 102a1 can clone all the layers of the rendering engine associated with the server 102, into the common data structure. The layers can include, for e.g., CSS animations, CSS transform, canvas, web graphical user interface (webGUI), accelerate CSS filters or the like.

At operation 228, the display layer pool 102a2 holds a virtual backup for each render layer and maintains a display layer for each of the render layers cloned at the render layer pool 102a1. Further, the display layer pool 102a2 maintains backup of all the layers maintained by the render layer pool 102al. Furthermore, the display layer pool 102a2 aids in maintaining all the animated layers that can be used by the electronic device 104 to animate the web content.

At operation 230, the display layer painter 102a3 virtually paints each display layer maintained by the display layer pool 102a2. The drawing commands issued to paint each of the display layers by the rendering engine, associated with the server 104, are maintained in a data structure, which can be used by the electronic device 104 to paint the actual web content on the screen.

At operation 232, the data structure is sent to a layer data compression associated with the electronic device 104. The display layer from the display layer painter 102a3 is therefore compressed in the layer data compression, which can be used by the electronic device 104.

In an embodiment, the content renderer 104a is very light module which runs on the electronic device 104. The content renderer 104a clones all the render layers and display layers received from the content renderer 102a. Each layer is painted and composited as per the data structure sent from display layer painter 102a3.

At operation 234, the pool of display layers from the display layer painter 102a3 are sent to the display layer interpreter 104a1 associated with the content renderer 104a of the electronic device 104. The display layers are further converted into an individual layers and are kept in sync with the content renderer 102a of the server 102. Once all the individual layers are decoded the display layer interpreter 104a1 triggers the display command generator 104a2 to decode the paint commands for each layer associated with the individual layers.

At operation 236, the draw commands (e.g., as the rendering commands) associated with each layer is decoded and kept ready for composition on to the screen of the electronic device 104. All the information like z-order, animation time, draw time is maintained by the display command generator 104a2.

At operation 238, the display command generator 104a2 communicates with graphics command painter module to paint all the draw commands (e.g., as the rendering commands).

At operation 240, the draw commands are sent to the screen, where the screen associated with the electronic device 104 displays the web content thereof.

For example, consider a scenario where the electronic device 104 requests to access the web content through the web browser application associated with the electronic device 104. The web content details are sent to the web rendering engine associated with the server 102 (for e.g., server of the web browser interconnected to the electronic device 104). The web rendering engine associated with the content renderer 102a thereby processes the requests by executing the aforementioned operations 202 to 232. As a result, the content renderer 104a, by executing the operations 236 to 240 associated with the electronic device 104, consumes less bandwidth, memory and power. Further, the quality of the rendering is similar to the rendering engine associated with the electronic device 104.

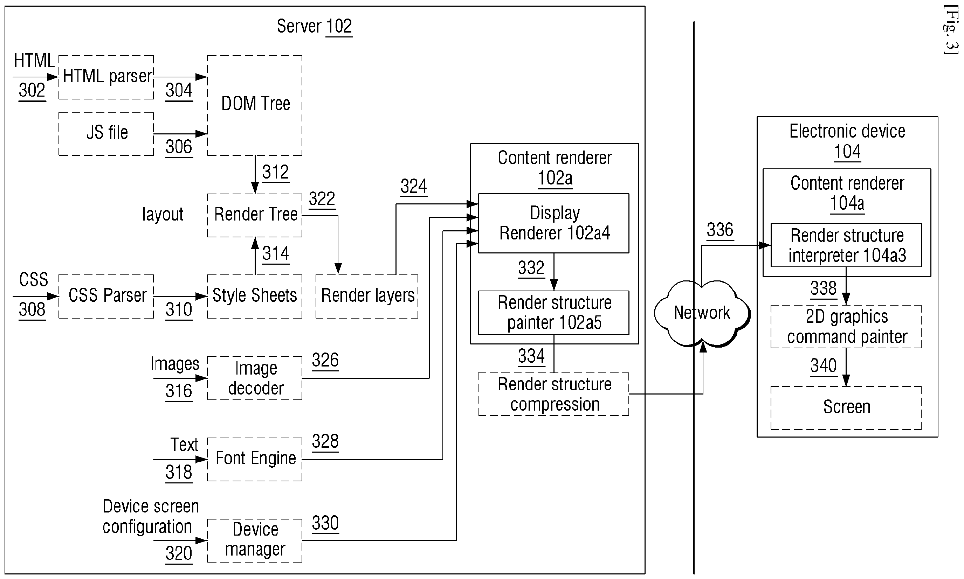

FIG. 3 illustrates another block diagram of as system to cause rendering of web content according to an embodiment as disclosed herein.

Referring to FIG. 3, in an embodiment, a content renderer 102a includes a display renderer 102a4 and a render structure painter 102a5. A content renderer 104a includes a render structure interpreter 104a3.

In an embodiment, the rendering engine associated with the server 102 receives the web content details associated with the electronic device 104 (i.e. the details associated with the web browser). The web content details can be the HTML file, the CSS file, the images, the text or the like.

At operation 302, the HTTP file associated with the web content is received by the HTML parser. Further, the string of symbols, words, phrases associated with the received HTML file is analyzed through the HTML parser and is tokenized.

At operation 304, the HTML file parsed by the HTML parser is sent to the DOM tree. The DOM tree is created to store node information of the web content corresponding to the received HTML file.

At operation 306, the string of symbols, words, phrases associated with the received JS file is parser and compiled (i.e., JIT compiled) through the JS interpreter. Further the JS file is sent to the DOM tree, where the DOM tree is created to store node information of the web content corresponding to the received JS file.

At operation 308, the string of symbols, words, phrases associated with the received CSS file is analyzed through the CSS parser.

At operation 310, the CSS style sheets are created for the nodes for which the styles are mentioned.

At operations 312 and 314, the render tree is created from the DOM tree and the CSS style sheets for all visible nodes. For each of these nodes, appropriate matching CSS tree rules get multiplied.

At operation 316, the web image resources associated with the web content are sent to the image decoder, where the web image resources are decoded thereof.

At operation 318, the text associated with the web content is sent to the font engine associated with the rendering engine of the server 102. The font engine thus processes the received text.

At operation 320, the device manager associated with the server 102 configures the screen associated with the electronic device 102.

At operation 322, the render layer is created, the render layer includes one or more layers associated therewith. These render layers can include for e.g., the render tree, the DOM tree, the CSS tree, and the decoded image. Further, the render layer associated with the web content is rendered onto the screen of electronic device 104.

At operations 324, 326, 328 and 330, the render layers, the image decoded from the image decoder, the text from the font engine and the device screen configuration from the device manager are sent to the display renderer 102a4. Thus, the display renderer 102a4 merges all the received render layers into one composite layer. The display renderer 102a4 includes one layer and all the draw commands are executed into this single layer.

At operation 332, the composite layer from the display renderer 102a4 are sent to the render structure painter 102a5. The render structure painter 102a5 maintains a draw commands in the data structure, where the draw commands are issued to paint the composite layers to render the web content on the electronic device 104. The render structure, from the render structure painter 102a5, can be stored by the server 102 for providing quick response to other electronic device(s) which are requesting the same web content.

At operation 334, the render structure from the render structure painter 102a5 is therefore sent to the render structure compression where the render structure is compressed and sent to the electronic device 104 at operation 336.

At operation 338, the render structure interpreter 104a3 decodes the render structure received from the server 102. Further, the render structure interpreter 104a3 issues a draw commands, as the render commands, using graphics command painter module (for e.g., 2D graphics command painter), associated with the electronic device 104. The received file can be stored for offline browsing by the electronic device 104.

At operation 340, the draw commands are sent to the screen, where the screen associated with the electronic device 104 displays the web content thereof.

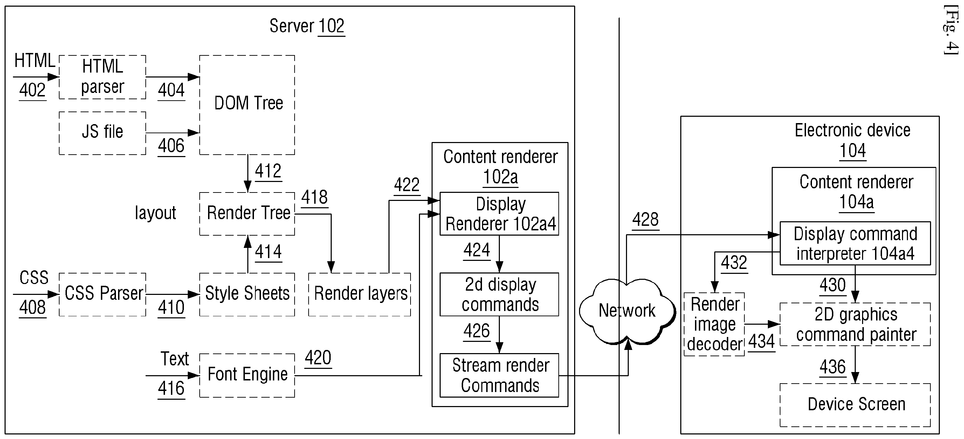

FIG. 4 illustrates another block diagram of a system to cause rendering of web content according to an embodiment as disclosed herein.

Referring to FIG. 4, in an embodiment, a content render 104a includes a display command interpreter 104a4.

In an embodiment, the rendering engine associated with a server 102 receives the web content details associated with an electronic device 104 (i.e. the details associated with the web browser). The web content details can be the HTML file, the CSS file, the images, the text or the like.

At operation 402, the HTTP file associated with the web content is received by the HTML parser. Further, the string of symbols, words, phrases associated with the received HTML file is analyzed through the HTML parser and is tokenized.

At operation 404, the HTML file parsed by the HTML parser is sent to the DOM tree. The DOM tree is created to store node information of the web content corresponding to the received HTML file.

At operation 406, the string of symbols, words, phrases associated with the received JS file is parser and compiled (i.e., JIT compiled) through the JS interpreter. Further the JS file is sent to the DOM tree, where the DOM tree is created to store node information of the web content corresponding to the received JS file.

At operation 408, the string of symbols, words, phrases associated with the received CSS file is analyzed through the CSS parser.

At operation 410, the CSS style sheets are created for the nodes for which the styles are mentioned.

At operations 412 and 414, the render tree is created from the DOM tree and the CSS style sheets for all visible nodes. For each of these nodes, appropriate matching CSS tree rule gets multiplied.

At operation 416, the text associated with the web content is sent to the font engine associated with the rendering engine of the server 102. The font engine thus processes the received text.

At operation 418, the render layer is created, the render layer includes one or more layers associated therewith. These render layers can include for e.g., the render tree, the DOM tree, the CSS tree, and the decoded image. Further, the render layer associated with the web content is rendered onto the screen of electronic device 104.

At operations 420 and 422, the render layers and the text from the font engine are sent to the display renderer 102a4. Thus, the display renderer 102a4 merges all the received render layers into one composite layer. The display renderer 102a4 includes one layer and all the draw commands are executed into this single layer. The display render 102a4 generates instructions to render the web content on to the device screen, associated with the electronic device 104, along with content and properties. Further, the display render 102a4 captures the web image information separately from the web content to leave image decoding operation to the electronic device 104 (web details associated with the web browser)

In an embodiment, at operation 424, the display renderer 102a4 generates the display commands, which are used by the electronic device 104.

At operation 426, the generated display commands are used to generate the draw commands.

At operation 428, the display render 102a4 sends all the instructions (content, image, draw commands), through the stream render commands, to the display command interpreter 104a4 of the electronic device 104. The display command interpreter 104a4 can decode the display commands received from the server 102.

At operation 430, the display command interpreter 104a4 issues the draw commands to the graphics command painter module of the electronic device 104.

At operation 432, the images can be decoded by the server 102 using the render image decoder module. Further, at operation 434 the decoded images are sent to the graphics command painter module to display the images.

At operation 436, the decoded images from the graphics command painter module are sent to the screen associated with the electronic device 104 to display the web content.

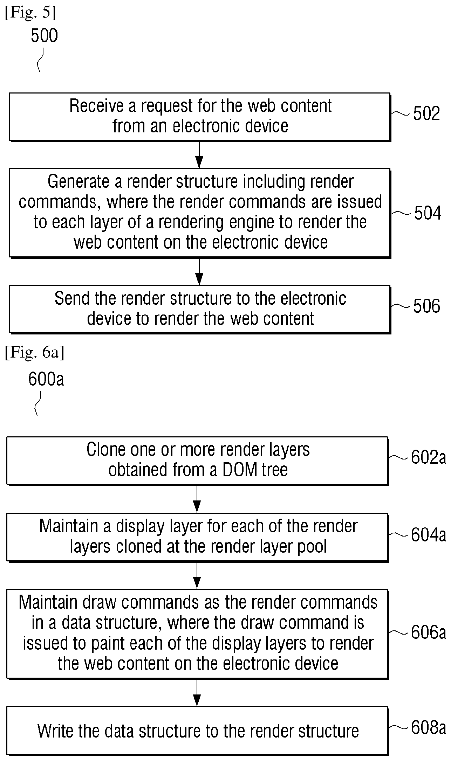

FIG. 5 is a flow diagram that illustrates a method to cause rendering of the web content through the server according to an embodiment of the present disclosure.

Referring to FIG. 5, at operation 502, a method 500 includes receiving the request for the web content from an electronic device 104. In an embodiment, the method 500 allows a controller unit 102b to receive the request for the web content from an electronic device 104.

At operation 504, the method 500 includes generating the render structure including the render commands, where the render commands are issued to each layer of the rendering engine to render the web content on the electronic device 104. In an embodiment, the method 500 allows the controller unit 102b to generate render structure including the render commands, where the render commands are issued to each layer of the rendering engine to render the web content on the electronic device 104. In an embodiment, the generation of the render structure is explained in conjunction with FIGS. 6A to 6C as described below.

At operation 506, the method 500 includes sending the render structure to the electronic device 104 to render the web content. In an embodiment, the method 500 allows the controller unit 102b to send the render structure to the electronic device 104 to render the web content.

The various actions, acts, blocks, operations, or the like in the method 500 may be performed in the order presented, in a different order or simultaneously. Further, in some embodiments, some of the actions, acts, blocks, operations, or the like may be omitted, added, modified, skipped, or the like without departing from the scope of the present disclosure.

FIGS. 6A to 6C are flow diagrams illustrating a method for generating a render structure including draw commands according to various embodiments of the present disclosure.

Referring to FIG. 6A, a method 600a associated with a content renderer 102a includes a render layer pool 102a1, a display layer pool 102a2, and a display layer painter 102a3. At operation 602a, the method 600a includes cloning the one or more render layers obtained from the DOM tree. In an embodiment, the method 600a allows a controller unit 102b to perform the cloning of one or more render layers obtained from a DOM tree.

At operation 604a, the method 600a includes maintaining the display layer for each of the render layers cloned at the render layer pool 102a1. In an embodiment, the method 600a allows the controller unit 102b to maintain the display layer for each of the render layers cloned at the render layer pool 102a1.

At operation 606a, the method 600a includes maintaining the draw commands in the data structure, where the draw commands are issued to paint each of the display layers to render the web content on the electronic device 104. In an embodiment, the method 600a allows the controller unit 102b to maintain the draw commands as the render commands in the data structure, where the draw commands are issued to paint each of the display layers to render the web content on the electronic device 104.

At operation 608a, the method 600a includes writing the data structure to the render structure. In an embodiment, the method 600a allows the controller unit 102b to write the data structure to the render structure.

The various actions, acts, blocks, operations, or the like in the method 600a may be performed in the order presented, in a different order or simultaneously. Further, in some embodiments, some of the actions, acts, blocks, operations, or the like may be omitted, added, modified, skipped, or the like without departing from the scope of the present disclosure.

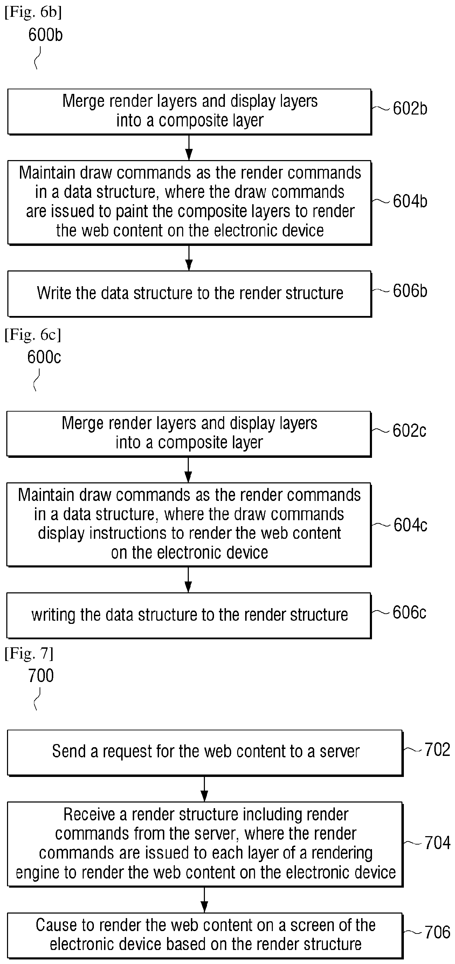

FIG. 6B is a flow diagram illustrating a method for generating a render structure including render commands according to an embodiment of the present disclosure.

Referring to FIG. 6B, a method 600b associated with a content renderer 102a includes, according to an embodiment as disclosed herein. In an embodiment the content renderer 102a includes a display renderer 102a4 and a render structure painter 102a5.

At operation 602b, the method 600b includes merging the render layers and display layers into the composite layer. In an embodiment, the method 600b allows the controller unit 102b to merge the render layers and display layers into the composite layer.

At operation 604b, the method 600b includes maintaining the draw commands as the render commands in the data structure, where the draw commands are issued to paint the composite layers to render the web content on the electronic device 104. In an embodiment, the method 600b allows the controller unit 102b to maintain the draw commands as the render commands in the data structure, where the draw commands are issued to paint the composite layers to render the web content on the electronic device 104.

At operation 606b, the method 600b includes writing the data structure to the render structure. In an embodiment, the method 600b allows the controller unit 102b to write the data structure to the render structure.

The various actions, acts, blocks, operations, or the like in the method 600b may be performed in the order presented, in a different order or simultaneously. Further, in some embodiments, some of the actions, acts, blocks, operations, or the like may be omitted, added, modified, skipped, or the like without departing from the scope of the present disclosure.

FIG. 6C is a flow diagram illustrating a method for generating a render stream including render commands according to an embodiment of the present disclosure.

Referring to FIG. 6C, a method 600c associated with a content renderer 102a, according to an embodiment as disclosed herein. In an embodiment the content renderer 102a includes a display renderer 102a4, where the display renderer 102a4 generates the display command and the stream render commands which can be used by an electronic device 104.

At operation 602c, the method 600c includes merging the render layers and display layers into the composite layer. In an embodiment, the method 600c allows the controller unit 102b to merge the render layers and display layers into the composite layer.

At operation 604c, the method 600c includes generating the draw commands as the render commands in the data structure, where the draw commands display instructions to render the web content on the electronic device 104. In an embodiment, the method 600c allows the controller unit 102b to generate the draw commands as the render commands in the data structure, where the draw commands display instructions to render the web content on the electronic device 104.

At operation 606c, the method 600c writing the data structure to the render stream. In an embodiment, the method 600c allows the controller unit 102b to write the data structure to the render stream.

The various actions, acts, blocks, operations, or the like in the method 600c may be performed in the order presented, in a different order or simultaneously. Further, in some embodiments, some of the actions, acts, blocks, operations, or the like may be omitted, added, modified, skipped, or the like without departing from the scope of the present disclosure.

FIG. 7 is a flow diagram illustrating a method to cause rendering of web content through a server according to an embodiment of the present disclosure.

Referring to FIG. 7, at operation 702, a method 700 includes sending a request for web content to a server 102. In an embodiment, the method 700 allows a controller unit 104b to send the request for the web content to the server 102.

At operation 704, the method 700 includes receiving the render structure including the render commands from the server 102, where the render commands are issued to each layer of a rendering engine to render the web content on the electronic device 104. In an embodiment, the method 700 allows the controller unit 104b to receive the render structure including the render commands from the server 102, where the render commands are issued to each layer of a rendering engine to render the web content on the electronic device 104.

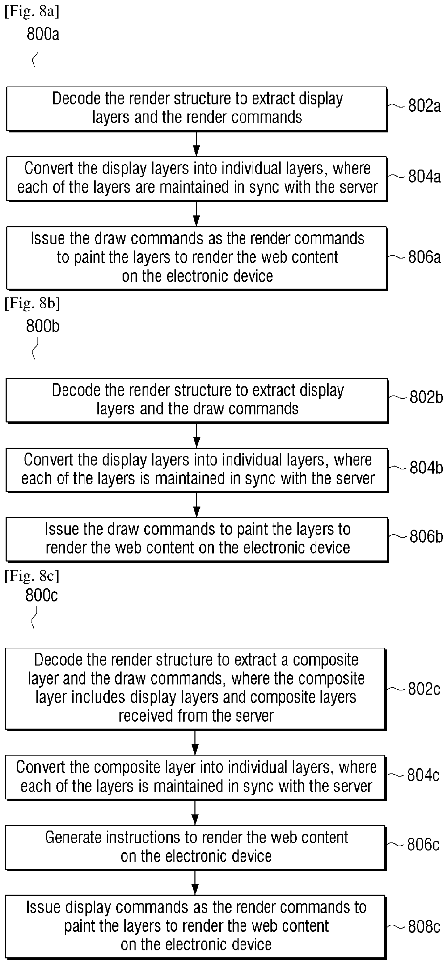

At operation 706, the method 700 includes causing to render the web content on the device screen of the electronic device 104 based on the render structure. In an embodiment, the method 700 allows the controller unit 104b to cause the web content to render on the screen of the electronic device 104 based on the render structure. In an embodiment, causing to render the web content on the screen of the electronic device 104 based on the render structure is explained in conjunction with FIGS. 8A to 8C as described below.

The various actions, acts, blocks, operations, or the like in the method 700 may be performed in the order presented, in a different order or simultaneously. Further, in some embodiments, some of the actions, acts, blocks, operations, or the like may be omitted, added, modified, skipped, or the like without departing from the scope of the present disclosure.

FIGS. 8A to 8C are flow diagrams illustrating a method to cause rendering of web content through an electronic device according to various embodiments of the present disclosure.

Referring to FIG. 8A, in an embodiment a method 800a associated with a content renderer 104a includes a display layer interpreter 104a1 and a display command generator 104a2.

At operation 802a, the method 800a includes decoding the render structure to extract the display layers and the render commands received from the server 102. In an embodiment, the method 800a allows the controller unit 104b to perform the decoding of the render structure to extract the display layers and the render commands received from the server 102.

At operation 804a, the method 800a includes converting the display layers into individual layers, where each of the layers is maintained in sync with the server 102. In an embodiment, the method 800a allows the controller unit 104b to convert the display layers into individual layers, where each of the layers is maintained in sync with the server 102.

At operation 806a, the method 800a includes issuing a draw commands as the render commands to paint the layers to render the web content on the electronic device 104. In an embodiment, the method 800a allows the controller unit 104b to issue the draw commands to paint the layers to render the web content on the electronic device 104.

The various actions, acts, blocks, operations, or the like in the method 800a may be performed in the order presented, in a different order or simultaneously. Further, in some embodiments, some of the actions, acts, blocks, operations, or the like may be omitted, added, modified, skipped, or the like without departing from the scope of the present disclosure.

FIG. 8B is a flow diagram illustrating a method to causing rendering of web content on a screen of an electronic device based on a render structure according to an embodiment of the present disclosure.

Referring to FIG. 8B, in an embodiment a method 800b associated with a content renderer 104a includes a render structure interpreter 104a3.

At operation 802b, the method 800b includes decoding the render structure to extract the display layers and the render commands. In an embodiment, the method 800b allows the controller unit 104b to perform the decoding of the render structure to extract the display layers and the render commands.

At operation 804b, the method 800b includes converting the display layers into individual layers, where each of the layers is maintained in sync with the server 102. In an embodiment, the method 800b allows the controller unit 104b to convert the display layers into individual layers, where each of the layers is maintained in sync with the server 102

At operation 806b, the method 800b includes issuing the draw commands to paint the layers to render the web content on the electronic device 104. In an embodiment, the method 800b allows the controller unit 104b to issue the draw commands as the render commands to paint the layers to render the web content on the electronic device 104.

The various actions, acts, blocks, operations, or the like in the method 800b may be performed in the order presented, in a different order or simultaneously. Further, in some embodiments, some of the actions, acts, blocks, operations, or the like may be omitted, added, modified, skipped, or the like without departing from the scope of the present disclosure.

FIG. 8C is a flow diagram illustrating a method to cause rendering of web content on a screen of an electronic device based on a render stream according to an embodiment of the present disclosure.

Referring to FIG. 8C, in an embodiment a method 800a associated with a content renderer 104a includes a display command interpreter 104a4.

At operation 802c, the method 800c includes decoding the render stream to extract the composite layer and the render commands, where the composite layer includes the display layers and the composite layers received from the server 102. In an embodiment, the method 800c allows the controller unit 104b to perform the decoding of the render stream to extract the composite layer and the render commands, where the composite layer includes the display layers and the composite layers received from the server 102.

At operation 804c, the method 800c includes converting the composite layer into individual layers, where each of the layers is maintained in sync with the server 102. In an embodiment, the method 800c allows the controller unit 104b to convert the composite layer into individual layers, where each of the layers is maintained in sync with the server 102.

At operation 806c, the method 800c includes generating instructions to render the web content on the electronic device 104. In an embodiment, the method 800c allows the controller unit 104b to generate instructions to render the web content on the electronic device 104.

At operation 808c, the method 800c includes issuing a display commands as the render commands to paint the layers to render the web content on the electronic device 104. In an embodiment, the method 800c allows the controller unit 104b to issue the display commands as the render commands to paint the layers to render the web content on the electronic device 104.

The various actions, acts, blocks, operations, or the like in the method 800c may be performed in the order presented, in a different order or simultaneously. Further, in some embodiments, some of the actions, acts, blocks, operations, or the like may be omitted, added, modified, skipped, or the like without departing from the scope of the present disclosure.

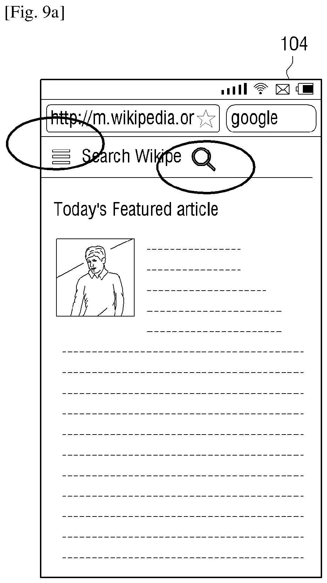

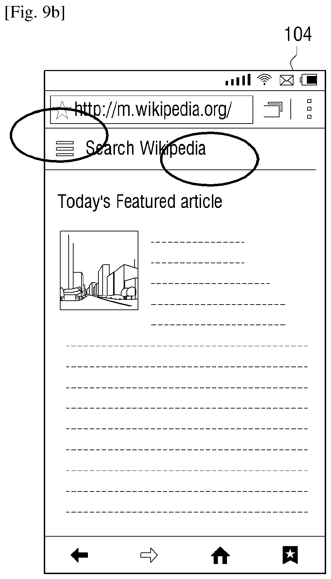

In an embodiment, for example, the web browser rendering details associated with the server 102 are sent to the electronic device 104, the render layers and the display layers are decoded and painted on the device screen by the electronic device 104 for enhanced rendering quality and user interaction features as shown in FIGS. 9A to 9B.

FIGS. 9A to 9D illustrate embodiments for a method to cause rendering of web content according to various embodiments of the present disclosure.

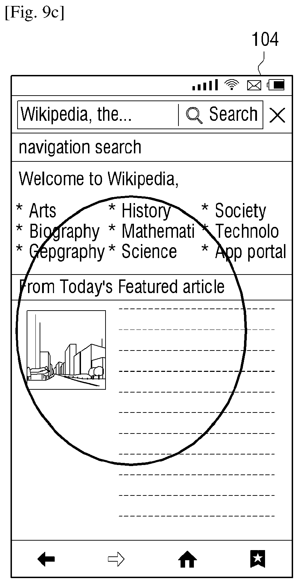

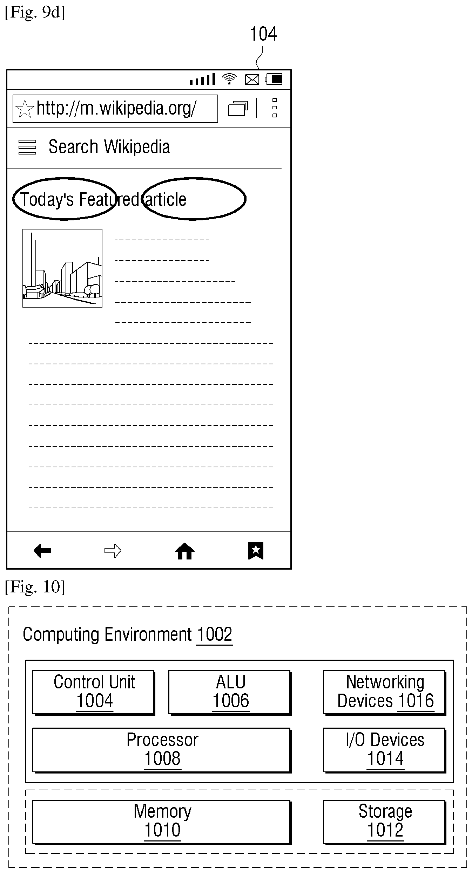

Referring to FIGS. 9C and 9D, in an embodiment, an electronic device 104 decodes rendered data and pastes it on a device screen based on a browser interface. Since pasting of the rendered data is processed by the electronic device 104, the rendering quality is better. As a result, browser data associated with the electronic device 104 and the rendered data, from the server 102, is identical.

Further, the rendering data (i.e. pasting of rendered data) is processed by the electronic device 104, there is no delay in loading the web content for features such as zoom, flick, scroll, or the like.

FIG. 10 illustrates a computing environment implementing a method to cause rendering of web content according to an embodiment of the present disclosure.

Referring to FIG. 10, a computing environment 1002 comprises at least one processor 1008 that is equipped with a control unit 1004 and an arithmetic logic unit (ALU) 1006, a memory 1010, a storage unit 1012, plurality of networking devices 1016 and a plurality of input output (I/O) devices 1014. The processor 1008 is responsible for processing instructions of a scheme. The processor 1008 receives commands from the control unit 1004 in order to perform its processing. Further, any logical and arithmetical operations involved in the execution of the instructions are computed with the help of the ALU 1006.

The overall computing environment 1002 can be composed of multiple homogeneous and/or heterogeneous cores, multiple central processing units (CPUs) of different kinds, special media and other accelerators. The processor 1008 is responsible for processing the instructions of the algorithm. Further, the plurality of processor 1008 may be located on a single chip or over multiple chips.

The algorithm comprising of instructions and codes required for the implementation are stored in either the memory unit 1010 or the storage 1012 or both. At the time of execution, the instructions may be fetched from the corresponding memory 1010 or storage 1012, and executed by the processing unit 1008.

In case of any hardware implementations various networking devices 1016 or external I/O devices 1014 may be connected to the computing environment to support the implementation through the networking unit and the I/O device unit.

In the meantime, the aforementioned render structure may include detailed information with respect to web content. Detailed information in relation to web content may include details relating to a web browser. For example, details relating to web browser may include an HTML, a CSS file, a JS file, an image, a text, web structure information, format information, or the like. The content renderer 102a of the server 102 may receive detailed information relating to web content and generate a corresponding render structure. As described above, as an embodiment, the display layer pool 102a2 holds a virtual backup for each render layer and maintains a display layer for each of the render layers cloned at the render layer pool 102a1. Further, the display layer pool 102a2 maintains backup of all the layers maintained by the render layer pool 102a1. Furthermore, the display layer pool 102a2 aids in maintaining all the animated layers that can be used by the electronic device 104 to animate the web content.

The display layer painter 102a3 virtually paints the each display layer maintained by the display layer pool 102a2. The drawing commands issued to paint each of the display layers by the rendering engine, associated with the server 104, are maintained in a data structure, which can be used by the electronic device 104 to paint the actual web content on the screen.

The data structure is sent to a layer data compression associated with the electronic device 104. The display layer from the display layer painter 102a3 is therefore compressed in the layer data compression, which can be used by the electronic device 104.

In an embodiment, the content renderer 104a is very light module which runs on the electronic device 104. The content renderer 104a clones all the render layers and display layers received from the content renderer 102a. Each layer is painted and composited as per the data structure sent from display layer painter 102a3.

The pool of display layers from the display layer painter 102a3 are sent to the display layer interpreter 104a1 associated with the content renderer 104a of the electronic device 104. The display layers are further converted into an individual layers and are kept in sync with the content renderer 102a of the server 102. Once all the individual layers are decoded the display layer interpreter 104a1 triggers the display command generator 104a2 to decode the paint commands for the each layer associated with the individual layers.

The draw commands (e.g., as the rendering commands) associated with the each layer is decoded and kept ready for composition on to the screen of the electronic device 104. All the information like z-order, animation time, draw time is maintained by the display command generator 104a2.

The display command generator 104a2 communicates with graphics command painter module to paint all the draw commands (e.g., as the rendering commands.

As another embodiment, the composite layer from the display renderer 102a4 are sent to the render structure painter 102a5. The render structure painter 102a5 maintains a draw commands in the data structure, where the draw commands are issued to paint the composite layers to render the web content on the electronic device 104. The render structure, from the render structure painter 102a5, can be stored by the server 102 for providing quick response to other electronic device(s) which are requesting the same web content.

The render structure from the render structure painter 102a5 is therefore sent to the render structure compression where the render structure is compressed and sent to the electronic device 104.

The render structure interpreter 104a3 decodes the render structure received from the server 102. Further, the render structure interpreter 104a3 issues a draw commands, as the render commands, using graphics command painter module (for e.g., 2D graphics command painter), associated with the electronic device 104. The received file can be stored for offline browsing by the electronic device 104.

In another embodiment, the display renderer 102a4 generates the display commands, which are used by the electronic device 104.

The generated display commands are used to generate the draw commands.

The display render 102a4 sends all the instructions (content, image, draw commands); through the stream render commands, to the display command interpreter 104a4 of the electronic device 104. The display command interpreter 104a4 can decode the display commands received from the server 102.

The display command interpreter 104a4 issues the draw commands to the graphics command painter module of the electronic device 104, and the images can be decoded by the server 102 using the render image decoder module. Further, the decoded images are sent to the graphics command painter module to display the images.

In sum, the content renderer 102a of the server 102 may receive detailed information relating to web content, and convert the information to be rendered in the electronic device 104 with power lower than that used for rendering in the electronic device 104 when detailed information relating to web content is rendered in the electronic device 104. In addition, the content renderer 102a of the server 102 may transmit detailed information relating to converted web content to the electronic device 104. The content renderer 104a of the electronic device 104 may receive detailed information relating to web content converted from the server 102, and generate rendering based on detailed information relating to received web content. Therefore, the electronic device 104 may process web content in low power.

The embodiments disclosed herein can be implemented through at least one software program running on at least one hardware device and performing network management functions to control the elements. The elements shown in FIGS. 1 to 10, include blocks which can be at least one of a hardware device, or a combination of hardware device and software module.

## Claims

1. A method of operating a server (102) to support rendering of web content, the method comprising:
receiving a request for the web content from an electronic device (104);
generating a render structure comprising render commands; and
sending the render structure to the electronic device (104) to render the web content, wherein generating the render structure comprises:
creating a render layer, wherein the render layer is based on web content details associated with a web browser application of the electronic device (104) and includes one or more actions to be performed on the web content by the electronic device (104);
cloning, by a render layer pool, the render layer obtained from a document object model, DOM, tree;
maintaining, by a display layer pool, a display layer for the cloned render layer;
maintaining, by a display render painter, draw commands which are instructions to the electronic device (104) to paint each display layer to render the web content; and
merging, by a display renderer, the render layer and the display layer into a composite layer, wherein the draw commands are maintained by a render structure painter in the composite layer as render commands.

2. A method of operating an electronic device (104) to render web content on a device screen, the method comprising:
sending a request for the web content to a server (102); and
receiving a render structure including render commands from the server (102);
wherein decoding the render structure to extract a composite layer and the render commands, wherein draw commands are stored as the render commands in the render structure;
decoding a render layer and a display layer from the composite layer; and using the render structure to paint the display layer to render the web content on the device screen ;
wherein the render layer is based on web content details associated with a web browser application of the electronic device (104) and includes one or more actions to be performed on the web content by the electronic device (104) and wherein the render layer is obtained from a document object model, DOM, tree and cloned by a render layer pool at the server, and
wherein a display layer is maintained by a display layer pool at the server for the cloned render layer, and maintaining by a display render painter at the server the draw commands which are instructions to the electronic device (104) to paint each display layer to render the web content.

3. The method of claim 2,
wherein rendering the web content comprises:
converting the display layer into individual layers; and
issuing the draw commands as the render commands to paint the individual layers to render the web content on the electronic device (104).

4. The method of claim 2,
wherein rendering the web content comprises:
converting the composite layer to individual layers; and
issuing the draw commands as the render command to paint the individual layers to render the web content on the electronic device (104),
wherein the composite layer comprises display layers and the composite layer received from the server (102).

5. The method of claim 2,
wherein rendering the web content comprises:
converting the composite layer into individual layers;
generating an instruction to render the web content on the electronic device (104); and
issuing display commands as the render commands to paint the individual layers to render the web content on the electronic device (104),
wherein the composite layer comprises display layers and the composite layer received from the server (102).

6. A server (102) for assisting rendering of web content, the server comprising:
a memory (102d); and
a processor (102b) coupled to the memory (102d);
the processor being configured to:
receive a request for the web content from an electronic device (104); and
send a render structure to the electronic device (104) to render the web content; wherein the
processor is further configured to:
generate a render layer, wherein the render layer is based on web content details associated with a web browser application of the electronic device (104) and includes one or more actions to be performed on the web content by the electronic device (104);
clone, by a render layer pool, the render layer obtained from a document object model, DOM, tree;
maintain, by a display layer pool, a display layer for the cloned render layer, maintain, by a display render painter, draw commands which are instructions to the electronic device (104) to paint each display layer to render the web content;
merge, by a display renderer, the render layer and the display layer into a composite layer, wherein the draw commands are maintained by a render structure painter in the composite layer as render commands.

7. The server of claim 6, further comprising:
a display renderer module (102a) configured to:
store the draw commands as the render commands in a data structure; and
write the data structure to the render structure.

8. The server of claim 6, wherein the processor is further configured to clone a plurality of render layers from a document object model, DOM, tree which has been parsed from the web content.

9. The server of claim 8, wherein the processor is further configured to maintain a display layer for each of the render layers cloned at the render layer pool.

## Patentansprüche

1. Verfahren zum Betreiben eines Servers (102), um das Rendern von Webinhalten zu unterstützen, wobei das Verfahren Folgendes umfasst:
Empfangen einer Anfrage nach dem Webinhalt von einem elektronischen Gerät (104);
Erzeugen einer Renderstruktur, die Renderbefehle umfasst; und
Senden der Renderstruktur an das elektronische Gerät (104) zum Rendern des Webinhalts, wobei das Erzeugen der Renderstruktur Folgendes umfasst:
Erstellen einer Renderebene, wobei die Renderebene auf Webinhaltsdetails basiert, die einer Webbrowser-Anwendung des elektronischen Geräts (104) zugeordnet sind, und eine oder mehrere Aktionen umfasst, die an dem Webinhalt durch das elektronische Gerät (104) auszuführen sind;
Klonen der aus einem Dokumentobjektmodell-DOM-Baum erhaltenen Renderebene durch einen Renderebenen-Pool;
Verwalten einer Anzeigeebene für die geklonte Renderebene durch einen Anzeigeebenen-Pool;
Verwalten von Zeichenbefehlen durch einen Anzeige-Rendermaler, die Anweisungen an das elektronische Gerät (104) sind, jede Anzeigeebene zu malen, um den Webinhalt zu rendern; und
Zusammenführen, durch einen Anzeige-Renderer, der Renderebene und der Anzeigeebene zu einer zusammengesetzten Ebene,
wobei die Zeichenbefehle von einem Renderstrukturmaler in der Verbundebene als Renderbefehle verwaltet werden.

2. Verfahren zum Betreiben eines elektronischen Geräts (104) zum Rendern von Webinhalt auf einem Gerätebildschirm, wobei das Verfahren Folgendes umfasst:
Senden einer Anfrage für den Webinhalt an einen Server (102); und
Empfangen einer Renderstruktur, die Renderbefehle enthält, vom Server (102);
wobei Decodieren der Renderstruktur, um eine zusammengesetzte Ebene und die Renderbefehle zu extrahieren,
wobei Zeichenbefehle als Renderbefehle in der Renderstruktur gespeichert werden;
Decodieren einer Renderebene und einer Anzeigeebene aus der zusammengesetzten Ebene; und Verwenden der Renderstruktur, um die Anzeigeebene zu malen, um den Webinhalt auf dem Gerätebildschirm zu rendern;
wobei die Renderebene auf Webinhaltsdetails basiert, die einer Webbrowser-Anwendung des elektronischen Geräts (104) zugeordnet sind, und eine oder mehrere Aktionen beinhaltet, die an dem Webinhalt durch das elektronische Gerät (104) auszuführen sind, und wobei die Renderebene von einem Dokumentobjektmodell-DOM-Baum erhalten und von einem Renderebenen-Pool auf dem Server geklont wird, und wobei eine Anzeigeebene von einem Anzeigeebenen-Pool auf dem Server für die geklonte Renderebene verwaltet wird, und Verwalten der Zeichenbefehle, die Anweisungen an das elektronische Gerät (104) sind, um jede Anzeigeebene zu malen, um den Webinhalt zu rendern, durch einen Anzeige-Rendermaler auf dem Server.

3. Verfahren nach Anspruch 2,
wobei das Rendern des Webinhalts Folgendes umfasst:
Umwandeln der Anzeigeebene in einzelne Ebenen; und
Ausgeben der Zeichenbefehle als Renderbefehle, um die einzelnen Ebenen zu malen, um den Webinhalt auf dem elektronischen Gerät (104) zu rendern.

4. Verfahren nach Anspruch 2,
wobei das Rendern des Webinhalts Folgendes umfasst:
Umwandeln der zusammengesetzten Ebene in einzelne Ebenen; und
Ausgeben der Zeichenbefehle als Renderbefehl, um die einzelnen Ebenen zu malen, um den Webinhalt auf dem elektronischen Gerät (104) zu rendern,
wobei die zusammengesetzte Ebene Anzeigeebenen und die zusammengesetzte Ebene, die vom Server (102) empfangen wird, umfasst.

5. Verfahren nach Anspruch 2,
wobei das Rendern des Webinhalts Folgendes umfasst:
Umwandeln der zusammengesetzten Ebene in einzelne Ebenen;
Erzeugen einer Anweisung zum Rendern des Webinhalts auf dem elektronischen Gerät (104); und
Ausgeben von Anzeigebefehlen als Renderbefehle, um die einzelnen Ebenen zu malen, um den Webinhalt auf dem elektronischen Gerät (104) zu rendern,
wobei die zusammengesetzte Ebene Anzeigeebenen und die zusammengesetzte Ebene, die vom Server (102) empfangen wird, umfasst.

6. Server (102) zum Unterstützen des Renderns von Webinhalten, wobei der Server Folgendes umfasst:
einen Speicher (102d); und
einen Prozessor (102b), der mit dem Speicher (102d) gekoppelt ist;
wobei der Prozessor konfiguriert ist, um:
eine Anfrage nach dem Webinhalt von einem elektronischen Gerät (104) zu empfangen; und
eine Renderstruktur an das elektronische Gerät (104) zu senden, um den Webinhalt zu rendern;
wobei der Prozessor ferner konfiguriert ist, um:
eine Renderebene zu erzeugen, wobei die Renderebene auf Webinhaltsdetails basiert, die einer Webbrowser-Anwendung des elektronischen Geräts (104) zugeordnet sind, und eine oder mehrere Aktionen umfasst, die an dem Webinhalt durch das elektronische Gerät (104) auszuführen sind;
durch einen Renderebenen-Pool die Renderebene zu klonen, die von einem Dokumentobjektmodell-DOM-Baum erhalten wurde;
durch einen Anzeigeebenen-Pool einen Anzeigeebene für den geklonten Renderebene zu verwalten,
durch einen Anzeigerendermaler Zeichenbefehle zu verwalten, die Anweisungen an das elektronische Gerät (104) sind, jede Anzeigeebene zu malen, um den Webinhalt zu rendern;
durch einen Anzeige-Renderer die Renderebene und die Anzeigeebene zu einer zusammengesetzten Ebene zusammenzuführen,
wobei die Zeichenbefehle von einem Renderstrukturmaler in der zusammengesetzten Ebene als Renderbefehle verwaltet werden.

7. Server nach Anspruch 6, ferner umfassend:
ein Anzeige-Renderer-Modul (102a), das konfiguriert ist, um:
die Zeichenbefehle als Renderbefehle in einer Datenstruktur zu speichern; und
die Datenstruktur in die Renderstruktur zu schreiben.

8. Server nach Anspruch 6, wobei der Prozessor ferner konfiguriert ist, um eine Vielzahl von Renderebenen aus einem Dokumentobjektmodell-DOM-Baum zu klonen, der aus dem Webinhalt geparst wurde.

9. Server nach Anspruch 8, wobei der Prozessor ferner konfiguriert ist, um eine Anzeigeebene für jede der im Renderebenen-Pool geklonten Renderebenen zu verwalten.

## Revendications

1. Procédé d'exploitation d'un serveur (102) pour prendre en charge le rendu de contenu Web, le procédé comprenant :
la réception d'une demande pour le contenu Web à partir d'un dispositif électronique (104) ;
la génération d'une structure de rendu comprenant des instructions de rendu ; et
l'envoi de la structure de rendu au dispositif électronique (104) pour effectuer le rendu du contenu Web,
dans lequel la génération de la structure de rendu comprend :
la création d'une couche de rendu, dans lequel la couche de rendu est basée sur des détails de contenu Web associés à une application de navigateur Web du dispositif électronique (104) et comporte une ou plusieurs actions à effectuer sur le contenu Web par le dispositif électronique (104) ;
le clonage, par un groupe de couches de rendu, de la couche de rendu obtenue à partir d'un arbre de modèle d'objet de document, DOM ;
le maintien, par un groupe de couches d'affichage, d'une couche d'affichage pour la couche de rendu clonée ;
le maintien, par un dispositif de peinture de rendu d'affichage, d'instructions de dessin qui sont des instructions transmises au dispositif électronique (104) pour peindre chaque couche d'affichage afin d'effectuer le rendu du contenu Web ; et
la fusion, par un dispositif de rendu d'affichage, de la couche de rendu et de la couche d'affichage en une couche composite, dans lequel les instructions de dessin sont maintenues par un dispositif de peinture de structure de rendu dans la couche composite en tant qu'instructions de rendu.

2. Procédé d'exploitation d'un dispositif électronique (104) pour effectuer le rendu d'un contenu Web sur un écran de dispositif, le procédé comprenant :
l'envoi d'une demande pour le contenu Web à un serveur (102) ; et
la réception d'une structure de rendu comportant des instructions de rendu à partir du serveur (102) ;
dans lequel
le décodage de la structure de rendu pour extraire une couche composite et les instructions de rendu, dans lequel des instructions de dessin sont stockées en tant qu'instructions de rendu dans la structure de rendu ;
le décodage d'une couche de rendu et d'une couche d'affichage à partir de la couche composite ; et l'utilisation de la structure de rendu pour peindre la couche d'affichage afin d'effectuer le rendu du contenu Web sur l'écran de dispositif ;
dans lequel la couche de rendu est basée sur des détails de contenu Web associés à une application de navigateur Web du dispositif électronique (104) et comporte une ou plusieurs actions à effectuer sur le contenu Web par le dispositif électronique (104) et dans lequel la couche de rendu est obtenue à partir d'un arbre de modèle d'objet de document, DOM, et clonée par un groupe de couches de rendu au niveau du serveur, et
dans lequel une couche d'affichage est maintenue par un groupe de couches d'affichage au niveau du serveur pour la couche de rendu clonée, et maintenant par un dispositif de peinture de rendu d'affichage au niveau du serveur les instructions de dessin qui sont des instructions transmises au dispositif électronique (104) pour peindre chaque couche d'affichage afin d'effectuer le rendu du contenu Web.

3. Procédé selon la revendication 2,
dans lequel le rendu du contenu Web comprend :
la conversion de la couche d'affichage en couches individuelles ; et
l'émission des instructions de dessin en tant qu'instructions de rendu pour peindre les couches individuelles afin d'effectuer le rendu du contenu Web sur le dispositif électronique (104).

4. Procédé selon la revendication 2,
dans lequel le rendu du contenu Web comprend :
la conversion de la couche composite en couches individuelles ; et
l'émission des instructions de dessin en tant qu'instruction de rendu pour peindre les couches individuelles afin d'effectuer le rendu du contenu Web sur le dispositif électronique (104),
dans lequel la couche composite comprend des couches d'affichage et la couche composite reçue à partir du serveur (102).

5. Procédé selon la revendication 2,
dans lequel le rendu du contenu Web comprend :
la conversion de la couche composite en couches individuelles ;
la génération d'une instruction pour effectuer le rendu du contenu Web sur le dispositif électronique (104) ; et
l'émission d'instructions d'affichage en tant qu'instructions de rendu pour peindre les couches individuelles afin d'effectuer le rendu du contenu Web sur le dispositif électronique (104),
dans lequel la couche composite comprend des couches d'affichage et la couche composite reçue à partir du serveur (102).

6. Serveur (102) permettant de contribuer au rendu de contenu Web, le serveur comprenant :
une mémoire (102d) ; et
un processeur (102b) couplé à la mémoire (102d) ;
le processeur étant configuré pour :
recevoir une demande pour le contenu Web à partir d'un dispositif électronique (104) ; et
envoyer une structure de rendu au dispositif électronique (104) afin d'effectuer le rendu du contenu Web ;
dans lequel
le processeur est en outre configuré pour :
générer une couche de rendu, dans lequel la couche de rendu est basée sur des détails de contenu Web associés à une application de navigateur Web du dispositif électronique (104) et comporte une ou plusieurs actions à effectuer sur le contenu Web par le dispositif électronique (104) ;
cloner, par un groupe de couches de rendu, la couche de rendu obtenue à partir d'un arbre de modèle d'objet de document, DOM ;
maintenir, par un groupe de couches d'affichage, une couche d'affichage pour la couche de rendu clonée,
maintenir, par un dispositif de peinture de rendu d'affichage, des instructions de dessin qui sont des instructions transmises au dispositif électronique (104) pour peindre chaque couche d'affichage afin d'effectuer le rendu du contenu Web ;
fusionner, par un dispositif de rendu d'affichage, la couche de rendu et la couche d'affichage en une couche composite, dans lequel les instructions de dessin sont maintenues par un dispositif de peinture de structure de rendu dans la couche composite en tant qu'instructions de rendu.

7. Serveur selon la revendication 6, comprenant en outre :
un module de dispositif de rendu d'affichage (102a) configuré pour :
stocker les instructions de dessin en tant qu'instructions de rendu dans une structure de données ; et
écrire la structure de données dans la structure de rendu.

8. Serveur selon la revendication 6, dans lequel le processeur est en outre configuré pour cloner une pluralité de couches de rendu à partir d'un arbre de modèle d'objet de document, DOM, qui a été analysé à partir du contenu Web.

9. Serveur selon la revendication 8, dans lequel le processeur est en outre configuré pour maintenir une couche d'affichage pour chacune des couches de rendu clonées au niveau du groupe de couches de rendu.
